# EUROPEAN PATENT SPECIFICATION

(11) **EP 4 541 718 B1**
(45) Date of publication and mention of the grant of the patent: **03.12.2025**
(21) Application number: 23203879.4
(22) Date of filing: 16.10.2023
(51) Int. Cl.: B64G 1/22, B64G 1/44, B64G 1/10

(54) **COVER FOR PROTECTION AGAINST AN ATMOSPHERIC OXIDANT**
SCHUTZDECKEL GEGEN ATMOSPHÄRISCHES OXIDATIONSMITTEL
COUVERCLE DE PROTECTION CONTRE UN OXYDANT ATMOSPHÉRIQUE

(43) Date of publication of application: 23.04.2025
(73) Proprietor: Airbus Defence and Space GmbH, 82024 Taufkirchen (DE)
(72) Inventor: Andreev, Thomas, 82024 Taufkirchen (DE); Fuchsluger, Stefan, 82024 Taufkirchen (DE); Neumann, Alwin, 82024 Taufkirchen (DE)
(74) Representative: Schicker, Silvia

(56) References cited:
- GB-A- 2 323 473
- US-A- 5 312 685
- US-A1- 2023 241 866
- US-B1- 6 248 950

## Description

### Technical Field

The invention relates to a cover for protection of space hardware against an atmospheric oxidant and an assembly comprising such cover.

### Background

In space missions, atmospheric oxidants, such as atomic oxygen or sulfuric acid, can be encountered. Such an environment exists in low earth orbits or in Venus, for example. It is well known that atomic oxygen (ATOX) as well as sulfuric acid can destroy space hardware, such as solar array hardware.

To protect such hardware from an atmospheric oxidant, it is state of the art to use atmospheric oxidant resistant material coatings to cover the entirety of the respective hardware. In case of a solar array hardware and in case of a solar panel, in particular, perforated surfaces are first continuously covered with a Kapton^{®} foil to create a non-perforated surface and then a fleece soaked in an atmospheric oxidant resistant adhesive is bonded onto the Kapton^{®} foil. Thereby, an atmospheric oxidant resistant top layer is created that is made of a single material, i.e. the aforementioned atmospheric oxidant resistant adhesive.

US 6 248 950 B1 is the closest prior art and discloses solar cell cover glass and an insulating material as a barrier, such as room temperature vulcanizable (RTV) adhesive, disposed in intercell gaps between solar cells. Further prior art is described in US 2023/241866 A1, US 5 312 685 A and GB 2 323 473 A.

### Summary

The problem to be solved by the present invention is to provide an alternative protection against an atmospheric oxidant.

A solution to the problem is provided by the features of claim 1. In other words, this solution pertains to a cover for protection of space hardware against an atmospheric oxidants, wherein the cover comprises: a first layer, which has one side configured to face away from space hardware and an opposite side configured to face towards space hardware, comprising: at least one first material portion, i.e. a portion made of a first material, and at least one second material portion, i.e. a portion made of a second material, wherein the first material and the second material are different atmospheric oxidant resistant materials.

The provision of two different atmospheric oxidant resistant materials allows for a control over the degree of protection against an atmospheric oxidant, for example depending on the level of protection needed at the respective portion of a space hardware covered by the cover.

It shall be noted that, here and in the following, the focus lies on protection against an atmospheric oxidant and on atmospheric oxidant resistant materials generally. However, the focus may lie on protection against atomic oxygen and/or sulfuric acid as well as on atomic oxygen resistant materials and/or sulfuric acid resistant materials specifically.

Both sides are a distance away from each other that corresponds to the thickness of the first layer. Each of the portions of the first layer extends from one side to the opposite side of the first layer, i.e. over the entire thickness of the first layer. Both sides of the first layer may be parallel to each other.

There may be at least two second material portions, wherein adjacent second material portions comprise a first material portion in-between. In other words, there may be one first material portion, which encloses several second material portions. The total space occupied by the at least one second material portion may be more than the total space occupied by the at least one first material portion in the first layer. The at least one first material portion and/or the at least one second material portion may be arranged in a pattern in the first layer.

The cover further comprises: a second layer, one side of which contacts the first layer, comprising: at least one first material portion, i.e. a portion made of the first material, and at least one third material portion, i.e. a portion made of a third material, wherein the first material portion of the first layer is in contact with the first material portion of the second layer, wherein the second material portion of the first layer is in contact with the third material portion of the second layer, wherein the second material is transparent, and wherein the third material is reflective, conductive, and atmospheric oxidant non-resistant.

By reflecting part of the light, the temperature of the cover can be reduced significantly, which further reduces the negative effect of the atmospheric oxidant and other negative effects by elevated temperatures. Additionally, by providing the cover with the integrated ability to reflect part of the light, overall mass benefits can be achieved, since additional light reflectors, which in the absence of such a reflective cover would have been necessary, can be omitted.

The term "contact" stands for "direct contact" between two structural elements. Therefore, it shall not denote an "indirect contact" between two structural elements, e.g. by means of an interposed third element.

Both sides of the second layer are a distance away from each other that corresponds to the thickness of the second layer. Each of the portions of the second layer extends from one side to the opposite side of the second layer, i.e. over the entire thickness of the second layer. Both sides of the second layer may be parallel to each other.

There may be at least two third material portions, wherein adjacent third material portions comprise a first material portion in-between. In other words, there may be one first material portion, which encloses several third material portions. The total space occupied by the at least one third material portion may be more than the total space occupied by the at least one first material portion in the second layer. The at least one first material portion and/or the at least one third material portion may be arranged in a pattern in the second layer.

The second material portion may cover one side of a respective third material portion entirely. The thickness of the third material portion may be less than the thickness of the second material portion. The second and third material portions may be provided as part of an optical surface reflector (OSR), which is an assembly or prefabricated part that allows light to pass through the second material portion to be reflected through the second material portion by the third material portion. So, the first layer and the second layer, instead of being separate layers, may form a single layer with portions formed by OSRs and first material portions.

The cover may further comprise a third layer, which contacts the other side of the second layer, wherein said other side is opposite to the one side of the second layer contacting the first layer, comprising: at least one first material portion, i.e. a portion made of the first material, and at least one fourth material portion, i.e. a portion made of a fourth material, wherein the third material portion of the second layer is in contact with the first material portion of the third layer and the fourth material portion of the third layer, and wherein the fourth material is conductive and atmospheric oxidant non-resistant.

There may be at least two fourth material portions, wherein adjacent fourth material portions comprise a first material portion in-between. In other words, there may be one first material portion, which encloses several fourth material portions. The total space occupied by the at least one fourth material portion may be less than the total space occupied by the at least one first material portion in the third layer. The at least one first material portion and/or the at least one fourth material portion may be arranged in a pattern in the third layer.

The fourth material portion may cover one side of a respective third material portion partially. The thickness of the fourth material portion may be more than the thickness of the third material portion.

By providing a conductive connection between the third material portion or the OSR, and the fourth material portion, the third material portion or the OSR can be grounded.

All of the above covers can be applied to perforated portions of space hardware directly, i.e. without requiring that the perforated portions are prepared by being continuously covered with a Kapton^{®} foil to create a non-perforated surface.

The first material and the second material may have a different degree of resistance against an atmospheric oxidant. The first material is an adhesive and the second material is glass. The third material is silver. The fourth material may be a room-temperature-vulcanizing adhesive.

The fourth material portion of the third layer may be centered to the third material portion of the second layer.

The second material portion and the third material portion may be provided as a prefabricated optical surface reflector (OSR), which allows light to pass through the second material portion to be reflected through the second material portion by the third material portion.

Another solution to the problem is provided by the features of claim 5. In other words, this solution pertains to an assembly for protection of space hardware against an atmospheric oxidant, comprising: a space hardware, and the cover, wherein the cover adheres to the space hardware.

The space hardware may be a solar array hardware. The cover may be adhered to a perforated light weight panel structure of the space hardware.

A method for manufacturing a cover for protection of space hardware against an atmospheric oxidant, which method is not according to the present invention, comprises the following steps:
(I) laying at least one prefabricated part made of an atmospheric oxidant resistant material onto a surface; and
(II) surrounding the prefabricated part with a different atmospheric oxidant resistant material that also contacts the surface.

The laying may be performed by a tool or by hand. The atmospheric oxidant resistant material may be glass. The surface can be flat and/or can be a foil sheet, which can be transparent. The prefabricated part may be the first material portion of the first layer or the OSR. The prefabricated part, e.g. the OSR, may be only partially made of an atmospheric oxidant resistant material, wherein only the atmospheric oxidant resistant material part, e.g. the second material portion of the OSR, contacts the surface. The surrounding may create at least one portion filled with an atmospheric oxidant resistant material and at least one portion that remains free of the atmospheric oxidant resistant material on the prefabricated part. The total space occupied by the at least one portion filled with an atmospheric oxidant resistant material may be more than the total space defined by the at least one portion that remains free of the atmospheric oxidant resistant material. In other words, only the at least one portion filled with an atmospheric oxidant resistant material is filled. These portions can be created by means of a mesh (not shown) that can be prepared with photoresist and/or that can be located over the prefabricated part and through which the atmospheric oxidant resistant material is guided to surround the prefabricated part and to create the at least one portion filled with an atmospheric oxidant resistant material. So, the atmospheric oxidant resistant material may be placed on the side of the mesh that is opposite to the side facing the prefabricated part and can subsequently be pushed through the mesh by a rubber spatula. The different atmospheric oxidant resistant material may be an adhesive, e.g. a room-temperature-vulcanizing adhesive. Only the at least one portion filled with an atmospheric oxidant resistant material may be filled. The filling may be performed by a rubber spatula used over the mesh, where the material for filling is placed.

Yet another method for manufacturing an assembly for protection of space hardware against an atmospheric oxidant, which method is not according to the present invention, comprises the steps (I) and (II) for manufacturing the cover and further comprises the following steps:
(III) providing a conductive adhesive for adhering the cover to the space hardware;
(IV) bringing the cover and the space hardware into contact with the adhesive in-between; and
(V) fixedly connecting the cover to the space hardware by means of adhesive curing.

By using a conductive adhesive, the prefabricated part, e.g. the OSR, can be grounded. The adhesive may be filled into the at least one portion to remain free of atmospheric oxidant resistant material. The cover and the space hardware can be brought into contact with each other by lifting the cover from or with the surface and placing it on top of the space hardware with the side of the cover opposite to the side of the cover placed on the surface. Alternatively, the space hardware may be placed on top of the side of the cover opposite to the side of the cover placed on the surface. The adhesive curing can be done by a vacuum process.

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. In the drawings:
- Fig. 1: shows a cross-section of a cover for protection of space hardware against an atmospheric oxidant, wherein the cover comprises a first layer.
- Fig. 2: shows a cross-section of a cover for protection of space hardware against an atmospheric oxidant, wherein the cover comprises the first layer and a second layer.
- Fig. 3: shows a cross-section of a cover for protection of space hardware against an atmospheric oxidant, wherein the cover comprises the first layer, the second layer and a third layer.
- Fig. 4a: shows a cross-section of an assembly, comprising the covers shown in Fig. 1 adhered to a space hardware.
- Fig. 4b: shows a cross-section of an assembly, comprising the covers shown in Fig. 2 adhered to a space hardware.
- Fig. 4c: shows a cross-section of an assembly, comprising the covers shown in Fig. 3 adhered to a space hardware.
- Fig. 5: shows a first step of a method for manufacturing the cover or the assembly.
- Fig. 6: shows a second step of a method for manufacturing the cover or the assembly.
- Fig. 7: shows a third step of a method for manufacturing the assembly.
- Fig. 8: shows a fourth step of a method for manufacturing the assembly.
- Fig. 9: shows a fifth step of a method for manufacturing the assembly.

### Detailed Description

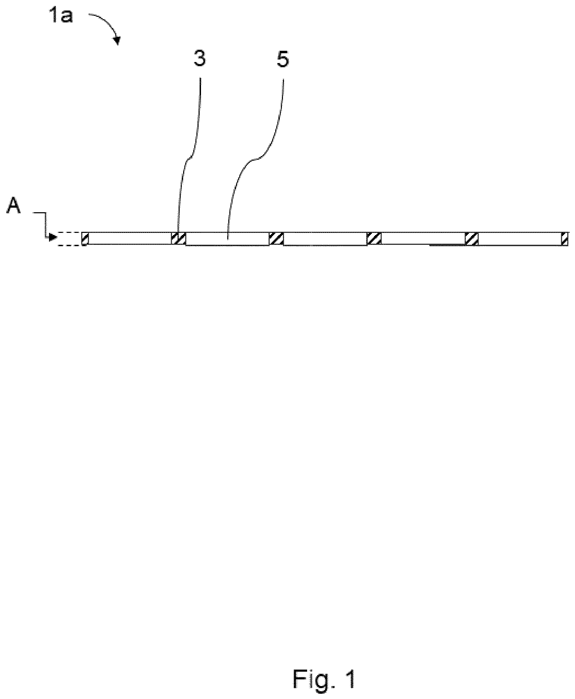

Fig. 1 shows a cross-section of a cover 1a for protection of space hardware against an atmospheric oxidant, wherein the cover 1a comprises a first layer A.

The first layer A has a one side configured to face away from space hardware and an opposite side configured to face towards space hardware. In Fig. 1, said one side is facing upwards and said opposite side is facing downwards. Both sides are parallel to each other and a distance away from each other that corresponds to the thickness of the first layer A. Said thickness, which is indicated by the vertical extension of the first layer A in Fig. 1, is less than the width extension, which is indicated by the horizontal extension of the first layer A in Fig. 1, and the length extension, which is orthogonal to the thickness and width extension, of each of the sides of the first layer A.

It is shown that the first layer A comprises portions made of a first material 3 (first material portions 3) and portions made of a second material 5 (second material portions 5), wherein the first material and the second material are different atmospheric oxidant resistant materials. Each of these portions extends from one side to the opposite side of the first layer A, i.e. over the entire thickness of the first layer A. In this case, the first material is a room-temperature-vulcanizing adhesive, and the second material is glass. Thereby, the first material and the second material have a different degree of resistance against an atmospheric oxidant.

Further, it is shown here that adjacent second material portions 5 comprise a first material portion 3 in-between. In other words, there is one first material portion 3, which encloses several second material portions 5. The total space occupied by the at least one second material portion 5 is more than the total space occupied by the at least one first material portion 3 in the first layer A. The at least one first material portion 3 and/or the at least one second material portion 5 is arranged in a pattern in the first layer A.

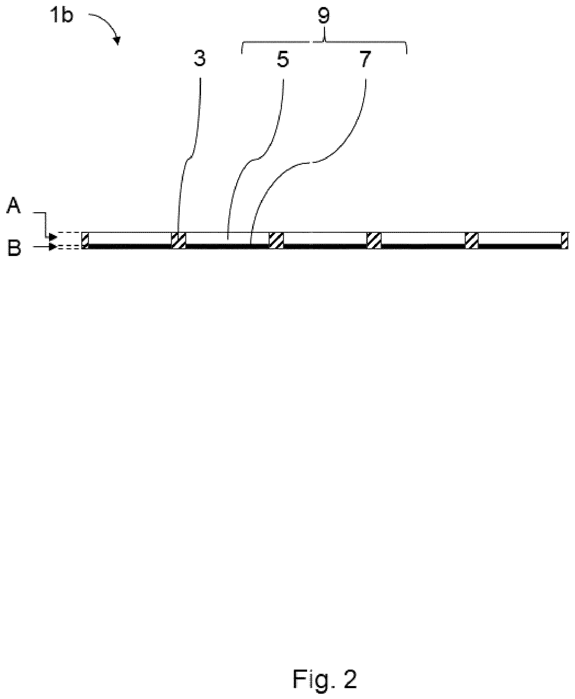

Fig. 2 shows a cross-section of a cover 1b for protection of space hardware against an atmospheric oxidant, wherein the cover 1b comprises the first layer A and a second layer B.

The second layer B has one side that contacts the first layer A and an opposite side further away from the first layer A. In Fig. 2, said one side of the second layer B faces upwards and contacts the side of the first layer A, which is configured to face towards space hardware, i.e. the side of the first layer A facing downwards, while said opposite side faces downwards. The term "contact" stands for "direct contact" between two structural elements. Therefore, it shall not denote an "indirect contact" between two structural elements, e.g. by means of an interposed third element. Both sides are parallel to each other and a distance away from each other that corresponds to the thickness of the second layer B. Said thickness, which is indicated by the vertical extension of the second layer B in Fig. 2, is less than the width extension, which is indicated by the horizontal extension of the second layer B in Fig. 2, and the length extension, which is orthogonal to the thickness and width extension, of each of the sides of the second layer B.

It is shown that the second layer B comprises portions made of the first material 3 and portions made of a third material 7 (third material portions 7), wherein the first material portion 3 of the first layer A is in contact with the first material portion 3 of the second layer B, wherein the second material portion 5 of the first layer A is in contact with the third material portion 7 of the second layer B, wherein the second material is transparent, and wherein the third material is reflective, conductive and atomic oxygen non-resistant. In this case, the third material is silver.

Further, it is shown here that adjacent third material portions 7 comprise a first material portion 3 in-between. In other words, there is one first material portion 3, which encloses several third material portions 7. The total space occupied by the at least one third material portion 7 is more than the total space occupied by the at least one first material portion 3 in the second layer B. The at least one first material portion 3 and/or the at least one third material portion 7 is arranged in a pattern in the second layer B.

Here, the second material portion 5 covers one side of a respective third material portion 7 entirely. Also, the thickness of the third material portion 7 is shown as being less than the thickness of the second material portion 5. In particular, the second and third material portions 5, 7 are provided as part of an optical surface reflector (OSR) 9, which is an assembly or prefabricated part that allows light to pass through the second material portion 5, which for that purpose is made of glass, to be reflected back through the second material portion 5 by the third material portion 7, which for that purpose is made of silver. Here, the first layer A and the second layer B, instead of being separate layers, form a single layer AB with portions formed by OSRs 9 and first material portions 3.

By reflecting part of the light, the temperature of the cover 1b is reduced significantly, which further reduces the negative effect of the atmospheric oxidant and other negative effects by elevated temperatures. Additionally, by providing the cover 1b with the integrated ability to reflect part of the light, overall mass benefits can be achieved, since additional light reflectors, which in the absence of such a reflective cover 1b would have been necessary, can be omitted.

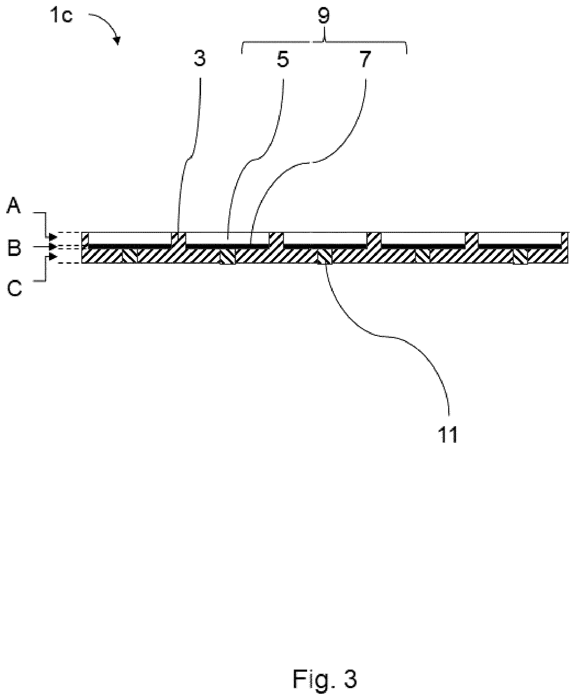

Fig. 3 shows a cross-section of a cover 1c for protection of space hardware against an atmospheric oxidant, wherein the cover 1c comprises the first layer A, the second layer B and a third layer C.

The third layer C has one side that contacts the second layer B and an opposite side further away from the second layer B. In Fig. 3, said one side of the third layer C faces upwards and contacts the side of the second layer B, which faces downwards and is opposite to the side of the second layer B contacting the first layer A, while said opposite side of the third layer C faces downwards. Both sides are parallel to each other and a distance away from each other that corresponds to the thickness of the third layer C. Said thickness, which is indicated by the vertical extension of the third layer C in Fig. 3, is less than the width extension, which is indicated by the horizontal extension of the third layer C in Fig. 3, and the length extension, which is orthogonal to the thickness and width extension, of each of the sides of the third layer C.

It is shown that the third layer C comprises portions made of the first material 3 and portions made of a fourth material 11 (fourth material portions 11), wherein the first material portion 3 of the second layer B is in contact with the first material portion 3 of the third layer C, wherein the third material portion 7 of the second layer B is in contact with the first material portion 3 of the third layer C and the fourth material portion 11 of the third layer C, and wherein the fourth material is conductive and atmospheric oxidant non-resistant. In this case, the fourth material is an adhesive.

The fourth material portion 11 covers one side of a respective third material portion 7 partially. The fourth material portion 11 of the third layer C is centered to the respective third material portion 7 of the second layer B. The thickness of the fourth material portion 11 is more than the thickness of the third material portion 7.

By providing a conductive connection between the third material portion 7 or the OSR, and the fourth material portion 11, the third material portion 7 or the OSR can be grounded.

Here, just as explained above regarding Fig. 2, the first layer A, the second layer B and the third layer C, instead of being separate layers, form a single layer ABC.

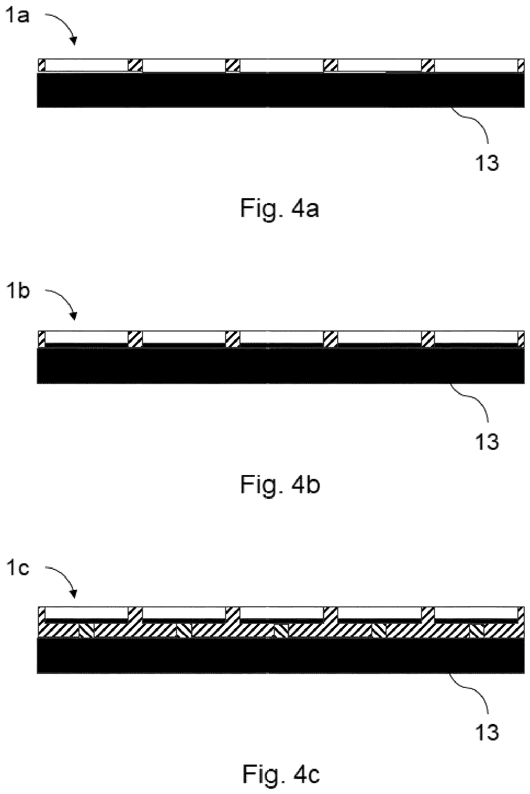

Fig. 4a, Fig. 4b and Fig. 4c each show an assembly of one of the above-described covers 1a, 1b, 1c adhered to a space hardware 13. Here, this space hardware 13 is a solar array hardware. The cover 1a, 1b, 1c is adhered to a perforated light weight panel structure of said space hardware 13. Thereby, the perforated portions of the space hardware 13 is protected from the atmospheric oxidant. All of the above covers 1a, 1b, 1c is applied to the perforated portions of said space hardware 13 directly, i.e. without requiring that the perforated portions are prepared by being continuously covered with a Kapton^{®} foil to create a non-perforated surface.

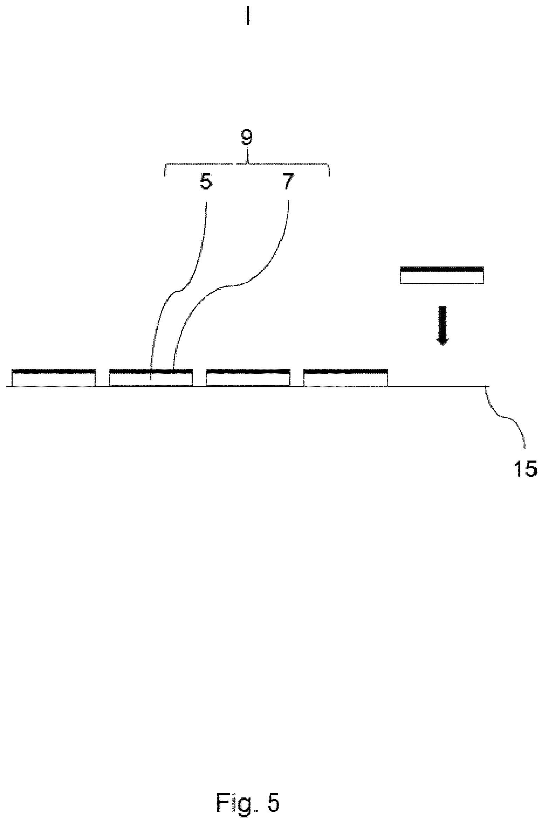

Fig. 5 shows a first step of a method for manufacturing the cover or the assembly.

In this first step I, at least one prefabricated part 5, 9 made of an atmospheric oxidant resistant material is layed onto a surface 15. The laying is performed either by hand or by a tool. The atmospheric oxidant resistant material is glass. The surface is flat and/or a foil sheet, which is transparent. The prefabricated part 5, 9 is the first material portion 5 of the first layer or the OSR 9. The prefabricated part, e.g. the OSR 9, is only partially made of an atmospheric oxidant resistant material, wherein only the atmospheric oxidant resistant material part, e.g. the second material portion 5 of the OSR 9, contacts the surface 15.

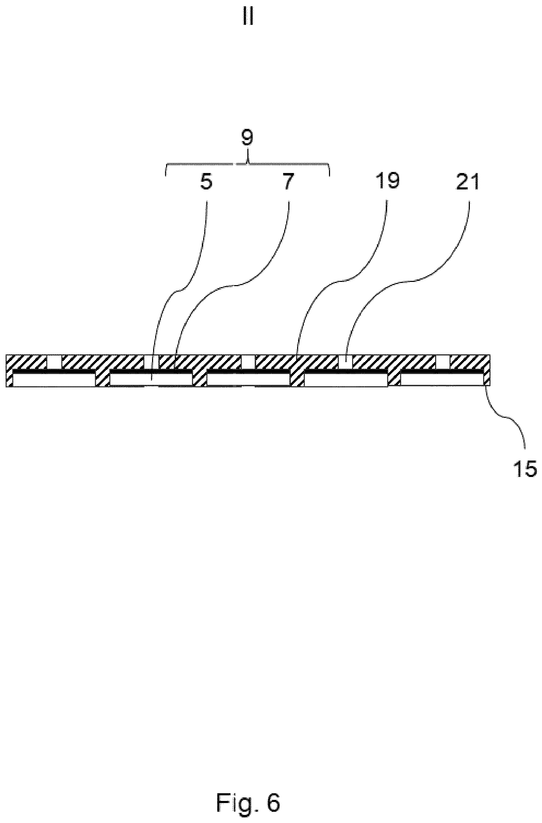

Fig. 6 shows a second step of a method for manufacturing the cover or the assembly.

In this second step II, the prefabricated part 5, 9 is surrounded with a different atmospheric oxidant resistant material that also contacts the surface 15. Thereby, the first layer A, or the first layer A and the second layer B are created. The different atmospheric oxidant resistant material is an adhesive, e.g. a room-temperature-vulcanizing adhesive. By this step II, at least one portion filled with an atmospheric oxidant resistant material 19 and at least one portion that remains free of the atmospheric oxidant resistant material 21 is created on the prefabricated part 5, 9. Thereby, the third layer C is created. The total space occupied by the at least one portion filled with an atmospheric oxidant resistant material 19 is more than the total space defined by the at least one portion that remains free of the atmospheric oxidant resistant material 21. In other words, only the at least one portion filled with an atmospheric oxidant resistant material 19 is filled. These portions can be created by means of a mesh (not shown) that can be prepared with photoresist and is located over the prefabricated part 5, 9 and through which the atmospheric oxidant resistant material is guided to surround the prefabricated part 5, 9 and create the at least one portion filled with an atmospheric oxidant resistant material 19. So, the atmospheric oxidant resistant material is placed on the side of the mesh that is opposite to the side facing the prefabricated part 5, 9 and can subsequently be pushed through the mesh by a rubber spatula.

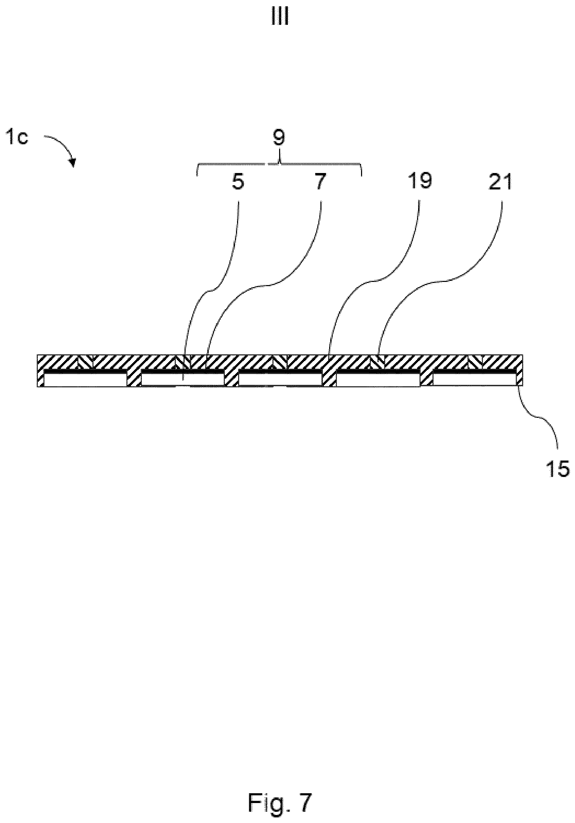

Fig. 7 shows a third step of a method for manufacturing the assembly.

In this third step III, an adhesive for adhering the cover 1a, 1b, 1c to the space hardware 13 is provided. The adhesive is a conductive adhesive. The adhesive is filled into the at least one portion to remain free of the atmospheric oxidant resistant material 21.

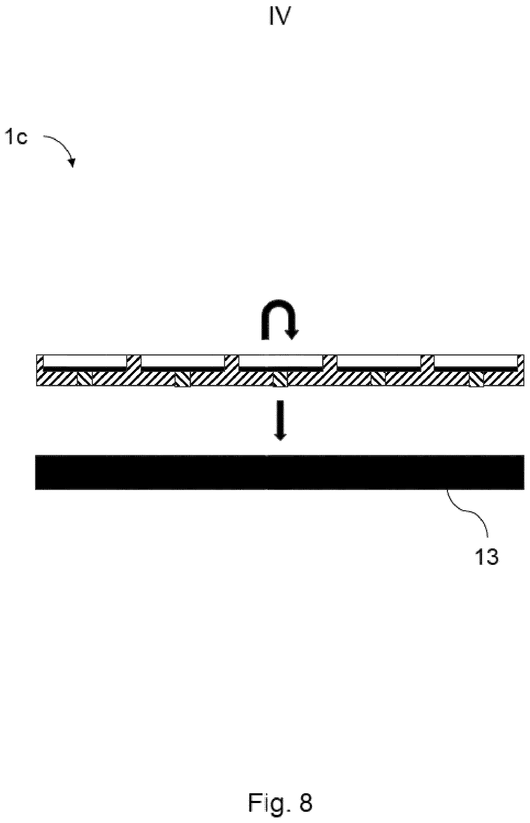

Fig. 8 shows a fourth step of a method for manufacturing the assembly.

In this fourth step IV, the cover 1a, 1b, 1c and the space hardware 13 are brought into contact with the adhesive in-between. This is done by lifting the cover 1a, 1b, 1c from or with the surface 15 and placing it on top of the space hardware 13 with the side of the cover 1a, 1b, 1c opposite to the side of the cover placed on the surface 15. Alternatively, the space hardware 13 is placed on top of the side of the cover 1a, 1b, 1c opposite to the side of the cover placed on the surface 15.

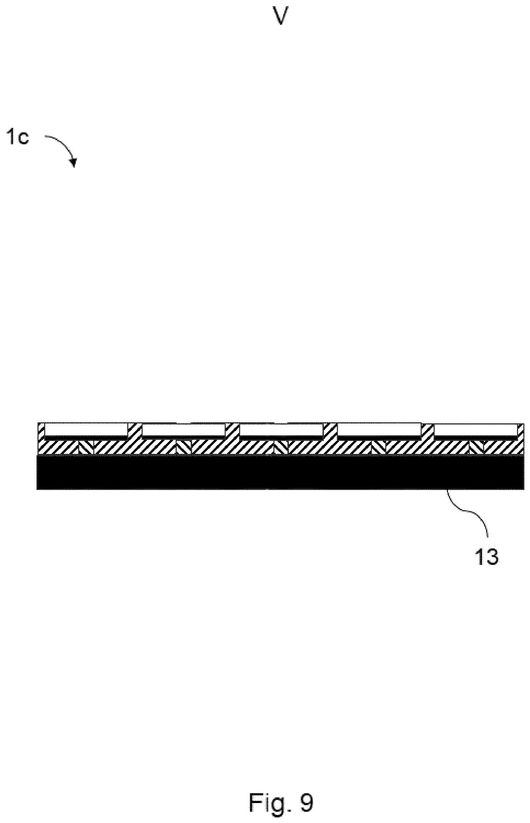

Fig. 9 shows a fifth step of a method for manufacturing the assembly.

In this fifth step V, the cover 1a, 1b, 1c is being fixedly connected to the space hardware 13 by means of adhesive curing. This is done by a vacuum process.

### List of Reference Signs

- 1a to 1c: cover
- 3: first material portion
- 5: second material portion
- 7: third material portion
- 9: optical surface reflector (OSR)
- 11: fourth material portion
- 13: space hardware
- 15: surface
- 19: portion filled with an atmospheric oxidant resistant material
- 21: portion free of the atmospheric oxidant resistant material

- A: first layer
- B: second layer
- C: third layer

## Claims

1. A cover (1b; 1c) for protection of space hardware (13) against an atmospheric oxidant, wherein the cover (1b; 1c) comprises:
a first layer (A), which has one side configured to face away from space hardware (13) and an opposite side configured to face towards space hardware (13), comprising:
at least one first material portion (3), and
at least one second material portion (5),
wherein the first material and the second material are different atmospheric oxidant resistant materials;
a second layer (B), one side of which contacts the first layer (A), comprising:
at least one first material portion (3), and
at least one third material portion (7),
wherein the first material portion (3) of the first layer (A) is in contact with the first material portion (3) of the second layer (B),
wherein the second material is transparent, and
wherein the first material is an adhesive, and
wherein the second material is glass;
**characterized in that**
the third material is silver, the second material portion (5) of the first layer (A) is in contact with the third material portion (7) of the second layer (B) and the third material is reflective, conductive, and atmospheric oxidant non-resistant.

2. The cover (1c) according to claim 1, wherein the cover (1c) further comprises:
a third layer (C), which contacts the other side of the second layer (B), wherein said other side is opposite to the one side of the second layer (B) contacting the first layer (A), comprising:
at least one first material portion (3), and
at least one fourth material portion (11),
wherein the third material portion (7) of the second layer (B) is in contact with the first material portion (3) of the third layer (C) and the fourth material portion (11) of the third layer (C), and
wherein the fourth material is conductive and atmospheric oxidant non-resistant.

3. The cover (1c) according to claim 2, wherein
the fourth material is a room-temperature-vulcanizing adhesive.

4. The cover (1c) according to claim 1 or 2, wherein
the second material portion (5) and the third material portion (7) are provided as a prefabricated optical surface reflector (9), which allows light to pass through the second material portion (5) to be reflected back through the second material portion (5) by the third material portion (7).

5. An assembly for protection of space hardware (13) against an atmospheric oxidant, comprising:
a space hardware (13), and
a cover (1a; 1b; 1c) according to any one of claims 1 to 4,
wherein the cover (1a; 1b; 1c) adheres to the space hardware (13).

## Patentansprüche

1. Abdeckung (1b; 1c) zum Schutz von Weltraumhardware (13) vor einem atmosphärischen Oxidationsmittel, wobei die Abdeckung (1b; 1c) umfasst:
eine erste Schicht (A), die eine Seite aufweist, die von der Weltraumhardware (13) weg zeigt, und eine gegenüberliegende Seite, die zur Weltraumhardware (13) hin zeigt, welche umfasst:
mindestens einen ersten Materialabschnitt (3) und
mindestens einen zweiten Materialabschnitt (5),
wobei das erste Material und das zweite Material unterschiedliche gegen ein atmosphärisches Oxidationsmittel beständige Materialien sind;
eine zweite Schicht (B), deren eine Seite mit der ersten Schicht (A) in Kontakt steht, welche umfasst:
mindestens einen ersten Materialabschnitt (3) und
mindestens einen dritten Materialabschnitt (7),
wobei der erste Materialabschnitt (3) der ersten Schicht (A) mit dem ersten Materialabschnitt (3) der zweiten Schicht (B) in Kontakt steht,
wobei das zweite Material transparent ist, und
wobei das erste Material ein Klebstoff ist, und
wobei das zweite Material Glas ist;
**dadurch gekennzeichnet, dass**
das dritte Material Silber ist, wobei der zweite Materialabschnitt (5) der ersten Schicht (A) mit dem dritten Materialabschnitt (7) der zweiten Schicht (B) in Kontakt steht, und wobei das dritte Material reflektierend, leitfähig und gegen ein atmosphärisches Oxidationsmitteln nicht beständig ist.

2. Abdeckung (1c) nach Anspruch 1, wobei die Abdeckung (1c) ferner umfasst:
eine dritte Schicht (C), die mit der anderen Seite der zweiten Schicht (B) in Kontakt steht, wobei die andere Seite der einen Seite der zweiten Schicht (B), die mit der ersten Schicht (A) in Kontakt steht, gegenüberliegt, und die umfasst:
mindestens einen ersten Materialabschnitt (3) und
mindestens einen vierten Materialabschnitt (11),
wobei der dritte Materialabschnitt (7) der zweiten Schicht (B) mit dem ersten Materialabschnitt (3) der dritten Schicht (C) und dem vierten Materialabschnitt (11) der dritten Schicht (C) in Kontakt steht, und
wobei das vierte Material leitfähig und gegen ein atmosphärisches Oxidationsmitteln nicht beständig ist.

3. Abdeckung (1c) nach Anspruch 2, wobei
das vierte Material ein bei Raumtemperatur vulkanisierender Klebstoff ist.

4. Abdeckung (1c) nach Anspruch 1 oder 2, wobei
der zweite Materialabschnitt (5) und der dritte Materialabschnitt (7) als vorgefertigter optischer Oberflächenreflektor (9) vorgesehen sind, der Licht durch den zweiten Materialabschnitt (5) hindurchlässt, um durch den zweiten Materialabschnitt (5) von dem dritten Materialabschnitt (7) zurückreflektiert zu werden.

5. Anordnung zum Schutz von Weltraumhardware (13) gegen ein atmosphärisches Oxidationsmittel, die umfasst:
eine Weltraumhardware (13) und
eine Abdeckung (1a; 1b; 1c) gemäß einem der Ansprüche 1 bis 4,
wobei die Abdeckung (1a; 1b; 1c) an der Weltraumhardware (13) haftet.

## Revendications

1. Couvercle (1b; 1c) de protection de matériel spatial (13) contre l'oxydation atmosphérique, le couvercle (1b; 1c) comprenant:
une première couche (A), dont une face est conçue de manière à s'éloigner du matériel spatial (13) et une face opposée est conçue de manière à se tourner vers le matériel spatial (13), comprenant:
au moins une première portion de matériau (3), et
au moins une deuxième portion de matériau (5),
dans lequel le premier matériau et le deuxième matériau sont différents matériaux résistant à l'oxydation atmosphérique;
une deuxième couche (B), dont une face est en contact avec la première couche (A), comprenant:
au moins une première portion de matériau (3), et
au moins une troisième portion de matériau (7),
dans lequel la première portion de matériau (3) de la première couche (A) est en contact avec la première portion de matériau (3) de la deuxième couche (B),
dans lequel le deuxième matériau est transparent, et
dans lequel le premier matériau est transparent, et
dans lequel le deuxième matériau est du verre;
caractérisé en ce
le troisième matériau est de l'argent, la deuxième portion de matériau (5) de la première couche (A) est en contact avec la troisième portion de matériau (7) de la deuxième couche (B) et le troisième matériau est réfléchissant, conducteur et non résistant à l'oxydation atmosphérique.

2. Couvercle (1c) selon la revendication 1, le couvercle (1c) comprenant en outre:
une troisième couche (C) en contact avec l'autre face de la deuxième couche (B), ladite autre face étant en regard de la face de la deuxième couche (B) en contact avec la première couche (A), comprenant:
au moins une première portion de matériau (3), et
au moins une quatrième portion de matériau (11),
dans lequel la troisième portion de matériau (7) de la deuxième couche (B) est en contact avec la première portion de matériau (3) de la troisième couche (C) et la quatrième portion de matériau (11) de la troisième couche (C), et
dans lequel le quatrième matériau est conducteur et ne résiste pas à l'oxydation atmosphérique.

3. Couvercle (1c) selon la revendication 2, dans lequel
le quatrième matériau est un adhésif vulcanisant à température ambiante.

4. Couvercle (1c) selon la revendication 1 ou 2, dans lequel
la deuxième portion de matériau (5) et la troisième portion de matériau (7) constituent un réflecteur de surface optique préfabriqué (9), qui permet à la lumière de traverser la deuxième portion de matériau (5) et d'être réfléchie à travers la deuxième portion de matériau (5) par la troisième portion en matériau (7).

5. Ensemble de protection de matériel spatial (13) contre un oxydant atmosphérique, comprenant:
un matériel spatial (13), et
un couvercle (1a; 1b; 1c) selon l'une quelconque des revendications 1 à 4;
dans lequel le couvercle (1a; 1b; 1c) adhère au matériel spatial (13).
